# EUROPEAN PATENT APPLICATION

(11) **EP 2 530 959 A1**
(43) Date of publication of application: **05.12.2012**
(21) Application number: 10844541.2
(22) Date of filing: 11.11.2010
(51) Int. Cl.: H04W 4/02, H04M 3/487, H04W 84/10

(54) **SERVICE DISTRIBUTION PLATFORM, SERVICE DISTRIBUTION SYSTEM, AND SERVICE DISTRIBUTION METHOD AND PROGRAM**

(30) Priority: 29.01.2010 JP 2010018640
(71) Applicant: NEC Corporation, Tokyo 108-8001 (JP)
(72) Inventor: IDE, Hirofumi, Tokyo 108-8001 (JP); KAYAHARA, Masayuki, Tokyo 108-8001 (JP)
(74) Representative: Robson, Aidan John
(86) International application number: PCT/JP2010/006615
(87) International publication number: WO 2011/092772

(57) **Abstract**

In order to materialize a Push-type service utilizing location information of a femto cell without improving core networking equipment, an SDP (30) forming a service delivery system (1) receives, from a RAN-GW (20) relaying traffic between a femto base station (10) and a core network (60), a message Set Presence indicating that a mobile phone (70) enters or leaves a femto cell (40) formed by the femto base station (10). The SDP (30) uses reception of the Set Presence as a trigger to deliver information to the mobile phone (70) or a destination set in association with the mobile phone (70).

## Description

### Technical Field

The present invention relates to a service delivery platform, a service delivery system, and a service delivery method and program, and particularly to a technique to deliver a service utilizing location information of a femto cell.

### Background Art

Recently, development of radio base stations which can be placed indoors has been advanced. A cell (radio communication area) formed by such a radio base station is generally called a femto cell since its cover area is extremely narrower (approximately several to tens of meters) than that of a radio base station placed outdoors. In the subsequent description, the radio base station forming the femto cell is referred to as a femto base station. By contrast, a radio base station forming a cell (generally called a macro cell) larger than the femto cell is referred to as a macro base station in some cases for differentiation from the femto base station. Note that in 3GPP (3rd Generation Partnership Project), the femto base station has been standardized as Home Node B (HNB).

Further, the femto base station is incorporated into a mobile communication network (core network) through a RAN-GW (Radio Access Network Gateway) via a public network such as the Internet. The femto base station is often introduced in order to supplement the cover area of the macro base station.

Furthermore, placement of the femto base station is easier than that of the macro base station. Therefore, it is under study to use the femto base station not only at the dead zone as mentioned above but also for a service utilizing location information of the femto cell (in other words, a service specific to a location where the femto base station is placed).

Note that a telecommunications carrier has considered introducing a service for disclosing user information of a mobile station such as a mobile phone to a third party such as a content provider or an advertising carrier. Thus, it is expected that a wide variety of services can be materialized by the third party.

PTLs 1 to 4, for example, disclose systems which deliver the service utilizing the location information of the femto cell as mentioned above. However, the systems disclosed by PTLs 1 to 4 intend to provide a Pull-type service for delivering information at the initiative of user operations when the mobile station camps on the femto cell. Therefore, there is a problem that it is difficult for a provider of the information to deliver the information in real time.

PTLs 5 and 6, for example, disclose systems which address this problem and materialize a Push-type service for delivering information at the provider's initiative.

Specifically, in the system disclosed by PTL 5, an HLR (Home Location Register) placed within the core network receives a location registration request from the mobile station through the femto base station, and then notifies an external information delivery server of location information indicating that the mobile station has entered the femto cell. Accordingly, the information delivery server transmits an application start request to the mobile station, thereby causing the mobile station to start an application for receiving information.

On the other hand, in the system disclosed by PTL 6, a management node placed within the core network receives the location registration request from the mobile station through the macro base station, and then transmits a request for registering the mobile station as a delivery destination of information (this request includes an address of the mobile station and an identifier of a service subscribed by a user of the mobile station) to a gateway (corresponding to a part of functions of so-called GGSN (Gateway GPRS Support Node)) placed within the core network. The gateway requests an external server corresponding to the service identifier to start delivering contents, and transfers the contents received from the server to the address of the mobile station.

### Citation List

### Patent Literature

**PTL 1:** Japanese Unexamined Patent Application Publication No. 2009-94559
**PTL 2:** Japanese Unexamined Patent Application Publication No. 2009-188629
**PTL 3:** Japanese Unexamined Patent Application Publication No. 2009-212663
**PTL 4:** Japanese Examined Patent Application Publication No. 2009-253465
**PTL 5:** Japanese Unexamined Patent Application Publication No. 2009-267463
**PTL 6:** Japanese Unexamined Patent Application Publication No. 2002-77254

### Summary of Invention

### Technical Problem

However, there is a problem that it is difficult to introduce the above-mentioned PTLs 5 and 6. This is because it is necessary to improve the existing core networking equipment (the HLR in the above-mentioned PTL 5, and the management node and a part of the functions of the GGSN in the above-mentioned PTL 6). In this case, operations of the core network must be stopped upon the introduction, so that all of mobile stations attaching to the core network cannot conduct communication.

Accordingly, an exemplary object of the present invention is to materialize a Push-type service utilizing location information of a femto cell without improving core networking equipment.

### Solution to Problem

In order to achieve the above-mentioned object, a service delivery platform according to one exemplary aspect of the present invention includes a first server that receives, from a gateway connected to a base station through a public network and relaying traffic between the base station and a core network, a message indicating that a mobile station enters or leaves a radio communication area formed by the base station; and a second server that uses reception of the message as a trigger to deliver information to the mobile station or a destination set in association with the mobile station.

Further, a service delivery system according to another exemplary aspect of the present invention includes a base station that forms a radio communication area; a gateway that is connected to the base station through a public network and that relays traffic between the base station and a core network; and a service delivery platform that delivers information to a mobile station capable of wirelessly connecting to the base station or a destination set in association with the mobile station. The service delivery platform uses reception from the gateway of a message indicating that the mobile station enters or leaves the radio communication area as a trigger to deliver the information.

Further, a service delivery method according to another exemplary aspect of the present invention includes receiving, from a gateway connected to a base station through a public network and relaying traffic between the base station and a core network, a message indicating that a mobile station enters or leaves a radio communication area formed by the base station; and using reception of the message as a trigger to deliver information to the mobile station or a destination set in association with the mobile station.

Furthermore, a service delivery program according to another exemplary aspect of the present invention causes a computer to execute a process to receive, from a gateway connected to a base station through a public network and relaying traffic between the base station and a core network, a message indicating that a mobile station enters or leaves a radio communication area formed by the base station; and a process to use reception of the message as a trigger to deliver information to the mobile station or a destination set in association with the mobile station.

### Advantageous Effects of Invention

According to the present invention, it is possible to materialize a Push-type service utilizing location information of a femto cell without improving core networking equipment.

### Brief Description of Drawings

Fig. 1 is a block diagram showing an example of a schematic structure of a service delivery system according to a first exemplary embodiment of the present invention;
Fig. 2 is a block diagram showing an example of a specific structure of the service delivery system according to the first exemplary embodiment of the present invention;
Fig. 3 is a sequence chart showing an example of an operation to register a Push condition in the service delivery system according to the first exemplary embodiment of the present invention;
Fig. 4 is a sequence chart showing one example of operations to monitor presence information in the service delivery system according to the first exemplary embodiment of the present invention;
Fig. 5 is a sequence chart showing another example of operations to monitor presence information in the service delivery system according to the first exemplary embodiment of the present invention;
Fig. 6 is a sequence chart showing one example of operations to deliver information in the service delivery system according to the first exemplary embodiment of the present invention;
Fig. 7 is a sequence chart showing another example of operations to deliver information in the service delivery system according to the first exemplary embodiment of the present invention;
Fig. 8 is a block diagram showing an example of a structure of a service delivery system according to a second exemplary embodiment of the present invention; and
Fig. 9 is a sequence chart showing an example of an operation of the service delivery system according to the second exemplary embodiment of the present invention.

### Description of Embodiments

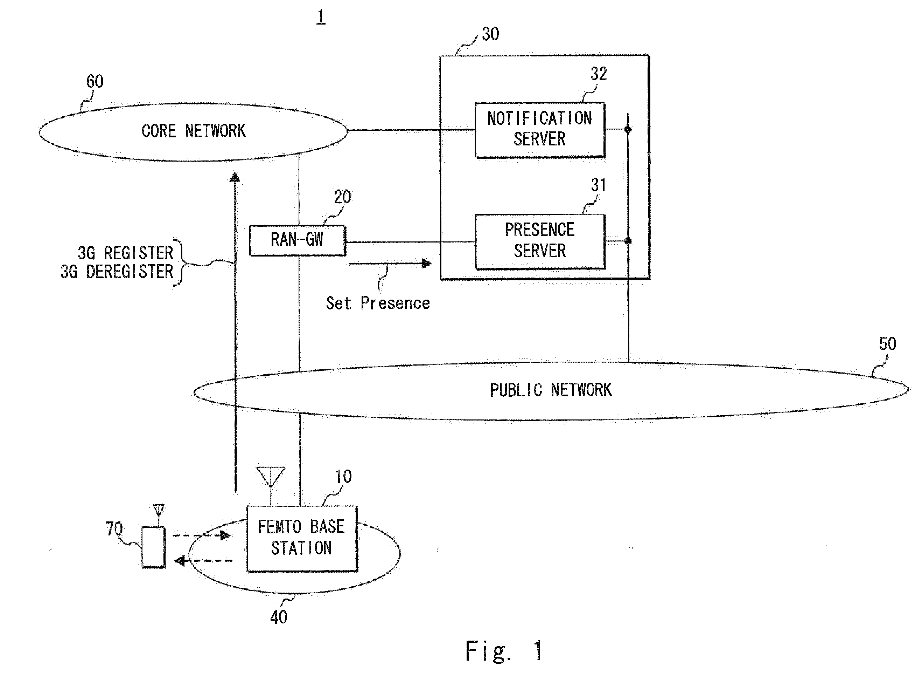

Hereinafter, first and second exemplary embodiments of an SDP (Service Delivery Platform) according to the present invention and a service delivery system to which the SDP is applied will be described with reference to Figs. 1 to 9. Note that in the drawings, the identical reference symbols denote identical elements and the redundant explanation thereof will be omitted as appropriate to clarify the explanation.

### [First exemplary embodiment]

As shown in Fig. 1, a service delivery system 1 according to this exemplary embodiment includes a femto base station 10, a RAN-GW 20, and an SDP 30.

Among them, the femto base station 10 forms a femto cell 40. Further, the femto base station 10 is incorporated into a core network 60 through the RAN-GW 20 via a public network 50 such as an IP (Internet Protocol) communication network or the Internet.

Further, the RAN-GW 20 relays various traffic between the femto base station 10 and the core network 60.

Furthermore, the SDP 30 delivers information to a mobile phone 70 serving as a mobile station which can wirelessly connect to the femto base station 10, or a destination (not shown) which is set in association with the mobile phone 70. Further, the SDP 30 includes a presence server 31 and a notification server 32. The presence server 31 corresponds to the above-described first server. The notification server 32 corresponds to the above-described second server.

In the operation, the RAN-GW 20 relays a location registration request (hereinafter, 3G REGISTER) to the core network 60 when the mobile phone 70 enters (camps on) the femto cell 40. In parallel with that, the RAN-GW 20 transmits to the SDP 30 a setting request (hereinafter, Set Presence) for presence information indicating that the mobile phone 70 has entered the femto cell 40. On the other hand, when the mobile phone 70 leaves (decamps from) the femto cell 40, the RAN-GW 20 relays a location deregistration request (hereinafter, 3G DEREGISTER) to the core network 60. In parallel with that, the RAN-GW 20 transmits to the SDP 30 the Set Presence indicating that the mobile phone 70 has left the femto cell 40.

The presence server 31 receives the Set Presence from the RAN-GW 20. On the other hand, the notification server 32 uses reception of the Set Presence (i.e., camping or decamping of the mobile phone 70 on or from the femto cell 40) as a trigger to deliver information. In a case of delivering the information to the mobile phone 70, the notification server 32 requests the core network 60 to transfer the information. Further, in a case where the destination set in association with the mobile phone 70 is another mobile phone, the notification server 32 requests the core network 60 to transfer the information. Furthermore, in a case where the destination set in association with the mobile phone 70 is a terminal other than the mobile phone such as a PC (Personal Computer), the notification server 32 transmits the information to the public network 50, for example.

Thus, in this exemplary embodiment, camping or decamping of the mobile phone on or from the femto cell can be used as a trigger to deliver information in real time to the mobile phone or a different terminal without improving any core networking equipment and accompanying user operations.

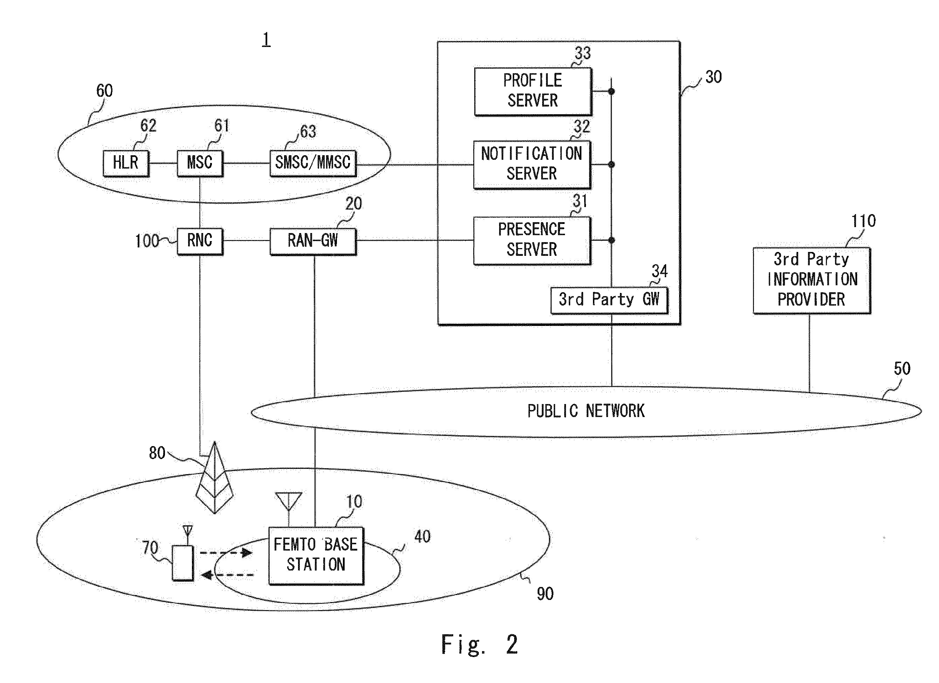

Hereinafter, specific examples of a structure and an operation of this exemplary embodiment will be described in detail with reference to Figs. 2 to 7.

As shown in Fig. 2, the femto base station 10 is placed within a macro cell 90 formed by a macro base station 80. In the service delivery system 1, a plurality of femto base stations may be placed. Further, a plurality of mobile phones can wirelessly connect to one femto base station. Note that the macro base station 80 is connected to the core network 60 through an RNC (Radio Network Controller) 100.

Further, the RAN-GW 20 is connected to the core network 60 through the RNC 100. In a case where a plurality of femto base stations are placed, the RAN-GW 20 relays traffic between each femto base station and the core network 60. Further, the above-mentioned 3G REGISTER and 3G DEREGISTER are received at an HLR 62 via an MSC (Mobile Switching Center) 61 placed within the core network 60. The HLR 62 updates location information of the mobile phone based on the 3G REGISTER and 3G DEREGISTER.

Furthermore, the SDP 30 includes a profile server 33 and a 3rd Party GW 34 in addition to the above-mentioned presence server 31 and notification server 32.

In a case where the RAN-GW 20 relays traffic between a plurality of femto base stations and the core network 60, the presence server 31 receives from the RAN-GW 20 the Set Presence which indicates camping or decamping of the mobile phone on or from each of femto cells formed by the respective femto base stations.

Further, the notification server 32 requests an SMSC (Short Message Service Center) or an MMSC (Multimedia Message Service Center) 63 placed within the core network 60 to transfer the information in a case of delivering the information to the mobile phone.

Further, the 3rd Party GW 34 operates as an interface to the public network 50, and performs authentication for a 3rd Party information provider 110 serving as a provider of the information delivered by the SDP 30, disclosure control upon disclosing the location information of the mobile phone and attribute information of the user to the 3rd Party information provider 110, and the like.

Furthermore, the profile server 33 typically manages identifiers of femto base stations and identifiers of mobile phones. Specifically, the profile server 33 preliminarily stores mapping information shown in the following items (A) to (C), in advance of the operations of the service delivery system 1.

(A) Mapping information indicating a correspondence relationship between HNB IDs and Area IDs. The HNB ID is an identifier for the core network 60 to uniquely identify the femto base station. Further, the Area ID is an identifier of the femto base station allocated for the 3rd Party information provider 110. The Area ID may be allocated for each femto base station, or may be allocated as a group identifier to a plurality of femto base stations. Examples of this group identifier include a case where the same Area ID is allocated in common to femto base stations placed in restaurants.

(B) Mapping information indicating a correspondence relationship between UE IMSIs (User Equipment International Mobile Subscriber Identities) and User IDs. The UE IMSI is an identifier for the core network 60 to uniquely identify the mobile phone (SIM (Subscriber Identity Module) card). Further, the User ID is an identifier of the mobile phone allocated for the 3rd Party information provider 110. The User ID may be allocated for each mobile phone, or may be allocated as a group identifier to a plurality of mobile phones. Examples of this group identifier include a case where the same Area ID is allocated in common to mobile phones used by males in their 30s.

(C) Mapping information indicating a correspondence relationship between the UE IMSIs and UE MSISDNs (Mobile Subscriber Integrated Services Digital Numbers). The UE MSISDN is a so-called telephone number of the mobile phone, and composed of a country code, a domestic address number and a subscriber number. Note that as a substitute for the UE MSISDN, an E-mail address of the mobile phone may be associated with the UE IMSI. Further, depending on a disclosure policy of the user information, the UE MSISDN (or E-mail address) may be allocated as the User ID as it is.

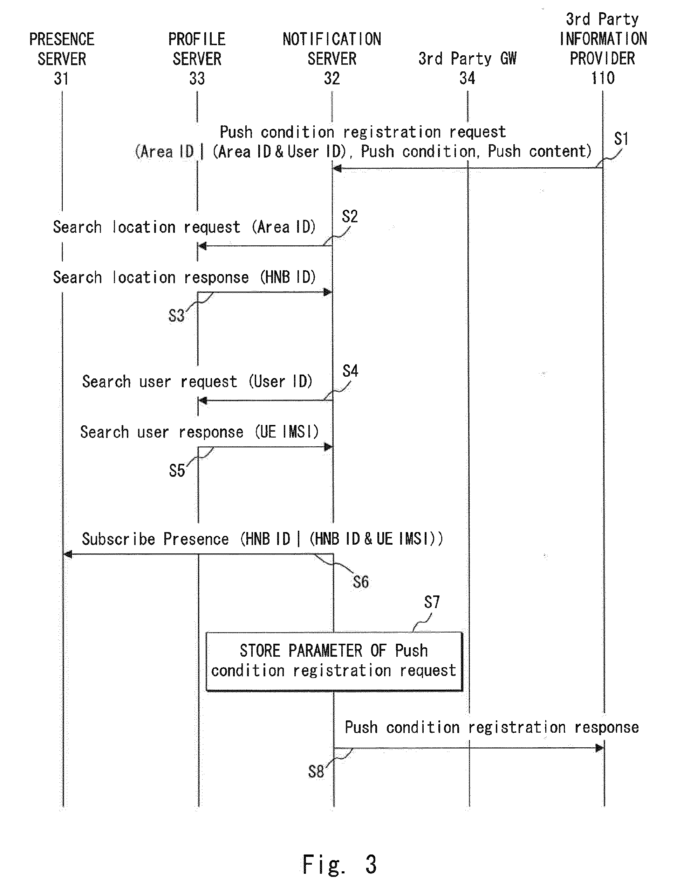

Hereinafter, with respect to the specific operation of this exemplary embodiment, operation examples listed in the following items (1) to (3) will be sequentially described with reference to Figs. 3 to 7.

(1) Operation example to register a Push condition
(2) Operation examples to monitor presence information
(3) Operation examples to deliver information

### (1) Operation example to register a Push condition

As shown in Fig. 3, the 3rd Party information provider 110 firstly transmits a Push condition registration request to the notification server 32 through the 3rd Party GW 34 (Step S1).

The Push condition registration request includes three parameters listed in the following items (D) to (F).

(D) Object to be monitored with respect to presence information: the Area ID (in other words, camping or decamping of any mobile phone on or from a specific femto cell) or a combination of the Area ID and the User ID (in other words, camping or decamping of a specific mobile phone on or from a specific femto cell) is designated in this parameter.

(E) Push condition: camping on a femto cell, decamping from the femto cell, or both of them are designated in this parameter.

(F) Push content: a message body in SMS or MMS (hereinafter, referred to as msg body in some cases) is designated in this parameter. Further, in a case of delivering the msg body to a mobile phone which is not the object to be monitored with respect to presence information or to a terminal other than the mobile phone, this parameter may include a delivery address for the msg body.

Then, the notification server 32 converts the Area ID into the HNB ID. Specifically, the notification server 32 transmits a Search location request including the Area ID to the profile server 33 (Step S2). The profile server 33 retrieves the mapping information described in the above-mentioned item (A) by using the Area ID as a key, thereby acquiring the HNB ID corresponding to the Area ID. Then, the profile server 33 transmits a Search location response including the acquired HNB ID to the notification server 32 (Step S3).

Further, when the User ID is designated as the object to be monitored with respect to presence information, the notification server 32 converts the User ID into the UE IMSI. Specifically, the notification server 32 transmits a Search user request including the User ID to the profile server 33 (Step S4). The profile server 33 retrieves the mapping information described in the above-mentioned item (B) by using the User ID as a key, thereby acquiring the UE IMSI corresponding to the User ID. Then, the profile server 33 transmits a Search user response including the acquired UE IMSI to the notification server 32 (Step S5).

Then, the notification server 32 transmits a Subscribe Presence to the presence server 31, thereby requesting the presence server 31 to notify the update of presence information intended for the HNB ID converted at the above-mentioned Step S3 or a combination of this converted HNB ID and the UE IMSI converted at the above-mentioned Step S5 (Step S6).

Next, the notification server 32 stores the parameters described in the above-mentioned items (D) to (F), which are included in the Push condition registration request, in a memory or the like in preparation to deliver the msg body (Step S7).

Finally, the notification server 32 transmits a Push condition registration response to the 3rd Party information provider 110 (Step S8).

### (2) Operation examples to monitor presence information

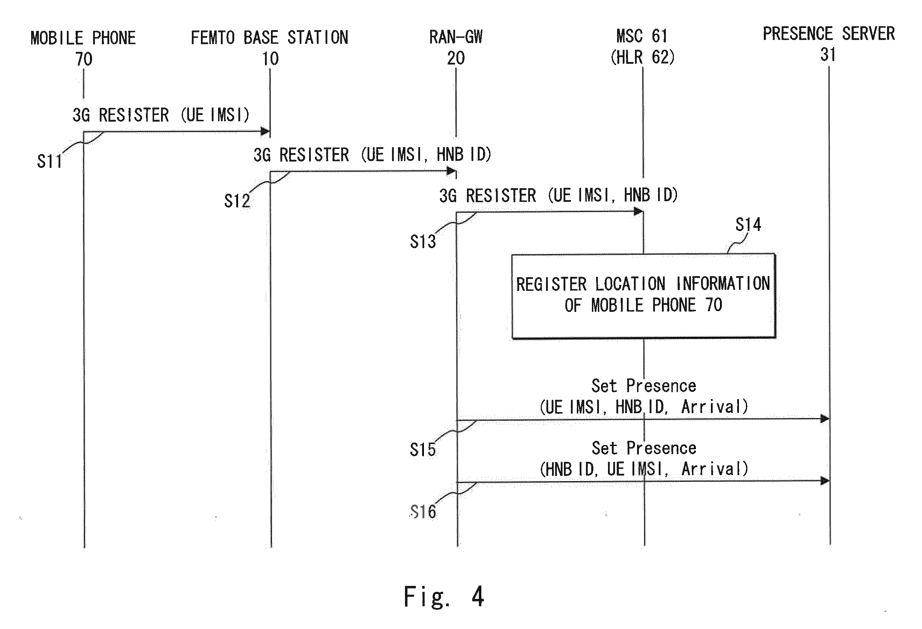

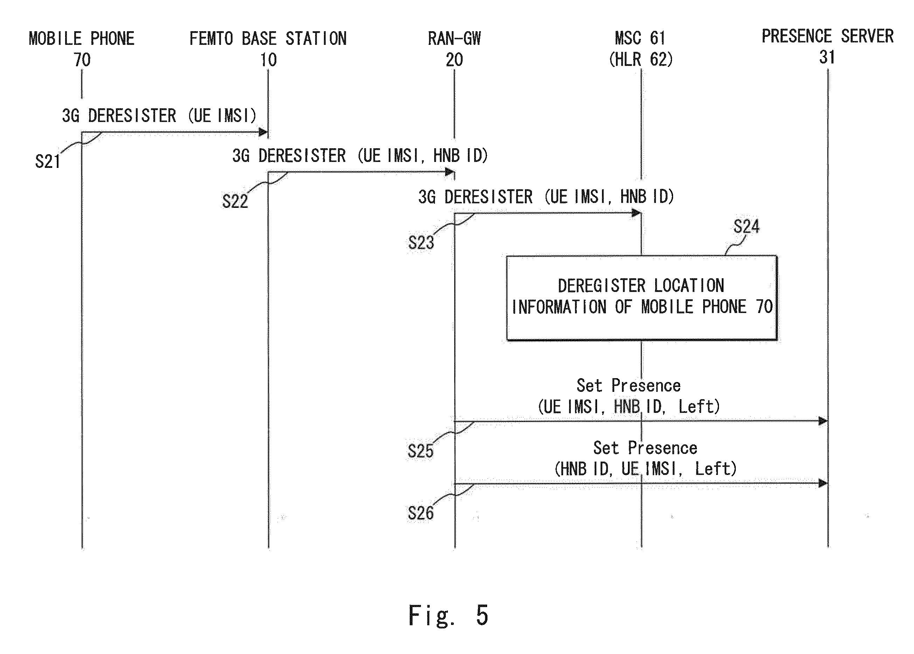

Next, with respect to the operation to monitor presence information, operation examples listed in the following items (2-1) and (2-2) will be sequentially described with reference to Figs. 4 and 5.

(2-1) Operation example in a case where the mobile phone enters the femto cell
(2-2) Operation example in a case where the mobile phone leaves the femto cell

### (2-1) Operation example in a case where the mobile phone enters the femto cell

As shown in Fig. 4, the mobile phone 70 enters the femto cell 40, and then transmits a 3G RESISTER including its own UE IMSI to the femto base station 10 (Step S11). The femto base station 10 transmits the 3G RESISTER, to which its own HNB ID is added, to the RAN-GW 20 (Step S12).

The RAN-GW 20 transfers the 3G RESISTER to the MSC 61 (Step S13). The MSC 61 transfers the 3G RESISTER to the HLR 62. The HLR 62 registers location information of the mobile phone 70 based on the 3G RESISTER (Step S14).

In parallel with the above-mentioned Step S 13, the RAN-GW 20 transmits to the presence server 31 a Set Presence including the following three parameters of User Name, Presence and Status (Step S 15). This Set Presence indicates that the mobile phone 70 has entered the femto cell 40.

- User Name: UE IMSI of the mobile phone 70
- Presence: HNB ID of the femto base station 10
- Status: Arrival (identifier indicating arrival at (entering) the femto cell 40)

Further, the RAN-GW 20 transmits to the presence server 31 a Set Presence including User Name, Presence and Status set as follows (Step S16). This Set Presence indicates that the femto cell 40 is newly camped on by the mobile phone 70.

- User Name: HNB ID of the femto base station 10
- Presence: UE IMSI of the mobile phone 70
- Status: Arrival

### (2-2) Operation example in a case where the mobile phone leaves the femto cell

As shown in Fig. 5, when the mobile phone 70 leaves the femto cell 40 to enter the macro cell 90 (or a different femto cell), the mobile phone 70 transmits a 3G DEREGISTER including its own UE IMSI to the femto base station 10 (Step S21). The femto base station transmits the 3G DEREGISTER, to which its own HNB ID is added, to the RAN-GW 20 (Step S22).

The RAN-GW 20 transfers the 3G DEREGISTER to the MSC 61 (Step S23). The MSC 61 transfers the 3G DEREGISTER to the HLR 62. The HLR 62 deregisters the location information of the mobile phone 70 based on the 3G DEREGISTER (Step S24). After that, if the mobile phone 70 is bound for the macro cell 90, the macro cell 90 is registered as the location information of the mobile phone 70. On the other hand, if the mobile phone 70 is bound for the different femto cell, the same operation as that in Fig. 4 is performed, so that the different femto cell is registered as the location information of the mobile phone 70.

In parallel with the above-mentioned Step S23, the RAN-GW 20 transmits to the presence server 31 a Set Presence including User Name, Presence and Status set as follows (Step S25). This Set Presence indicates that the mobile phone 70 has left the femto cell 40.

- User Name: UE IMSI of the mobile phone 70
- Presence: HNB ID of the femto base station 10
- Status: Left (identifier indicating leaving the femto cell 40)

Further, the RAN-GW 20 transmits to the presence server 31 a Set Presence including User Name, Presence and Status set as follows (Step S26). This Set Presence indicates that the femto cell 40 has been no longer camped on by the mobile phone 70.

- User Name: HNB ID of the femto base station 10
- Presence: UE IMSI of the mobile phone 70
- Status: Left

### (3) Operation examples to deliver information

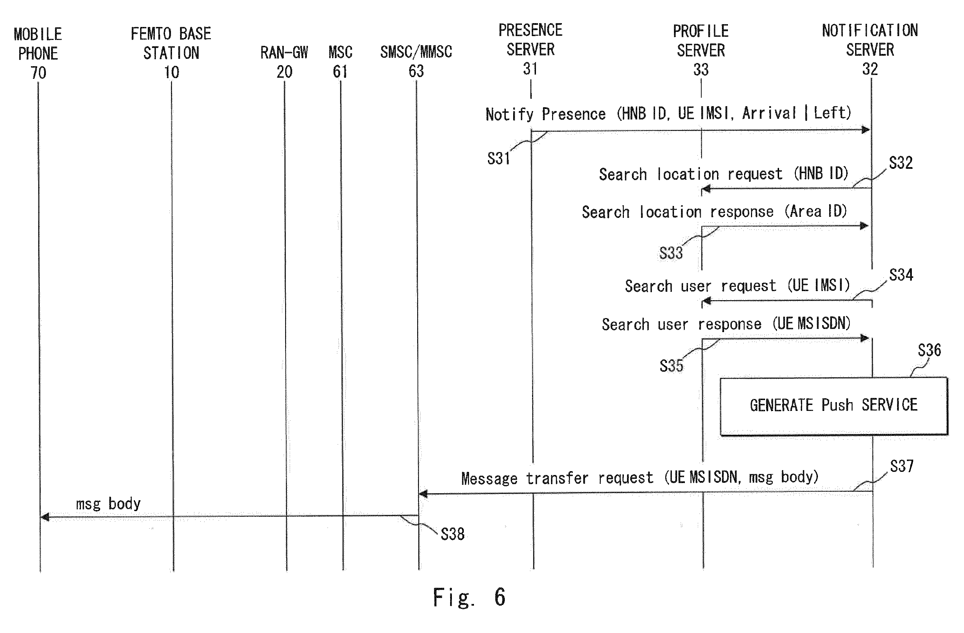

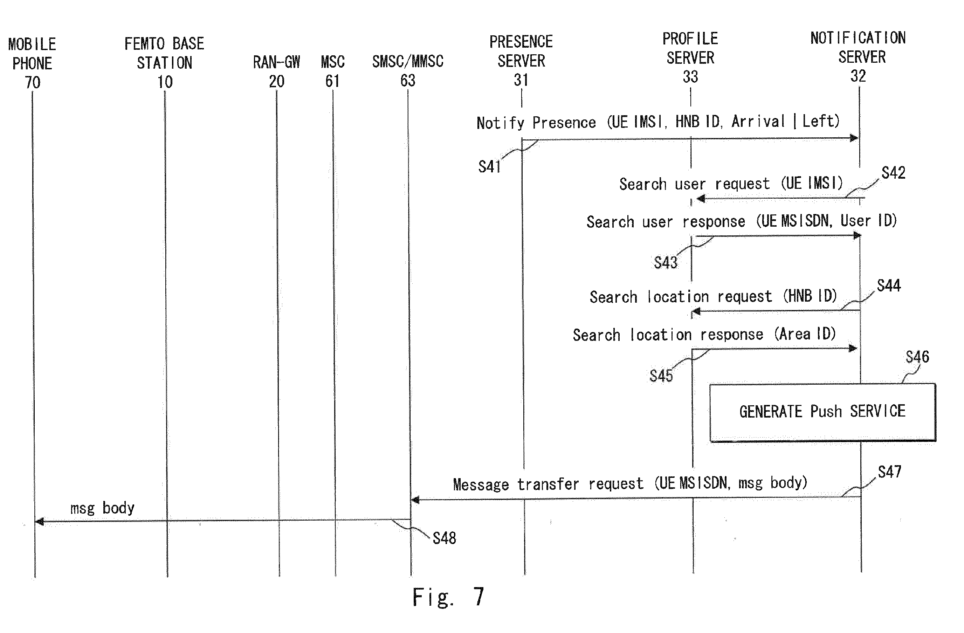

Finally, with respect to the operation to deliver information, operation examples listed in the following items (3-1) and (3-2) will be sequentially described with reference to Figs. 6 and 7.

(3-1) Operation example in a case of using as a trigger any mobile phone's entering or leaving a specific femto cell
(3-2) Operation example in a case of using as a trigger a specific mobile phone's entering or leaving a specific femto cell

### (3-1) Operation example in a case of using as a trigger any mobile phone's entering or leaving a specific femto cell

As shown in Fig. 6, the presence server 31 transmits to the notification server 32 a notification (hereinafter, Notify Presence) of update of presence information intended for the HNB ID required at Step S6 in Fig. 3 (Step S31). Taking as an example a case where the Notify Presence is intended for the HNB ID of the femto base station 10, the Notify Presence includes the following three parameters of User Name, Presence and Status.

- User Name: HNB ID of the femto base station 10
- Presence: UE IMSI of the mobile phone 70
- Status: Arrival or Left

Then, the notification server 32 converts the notified HNB ID into the Area ID. Specifically, the notification server 32 transmits a Search location request including the HNB ID to the profile server 33 (Step S32). The profile server 33 retrieves the mapping information described in the above-mentioned item (A) by using the HNB ID as a key, thereby acquiring the Area ID corresponding to the HNB ID. Then, the profile server 33 transmits a Search location response including the acquired Area ID to the notification server 32 (Step S33).

Further, the notification server 32 converts the notified UE IMSI into the UE SISDN. Specifically, the notification server 32 transmits a Search user request including the UE IMSI to the profile server 33 (Step S34). The profile server 33 retrieves the mapping information described in the above-mentioned item (C) by using the UE IMSI as a key, thereby acquiring the UE MSISDN corresponding to the UE IMSI. Then, the profile server 33 transmits a Search user response including the acquired UE MSISDN to the notification server 32 (Step S35).

Then, the notification server 32 generates a Push service by using the Area ID converted at the above-mentioned Step S33 and the above-mentioned parameters (D) to (F) stored at Step S7 in Fig. 3 (Step S36).

Specifically, the notification server 32 determines whether or not the acquired Area ID coincides with the stored Area ID. If the both Area IDs do not coincide with each other, the notification server 32 does not deliver information.

On the other hand, if the both Area IDs coincide with each other, the notification server 32 delivers to the mobile phone 70 the msg body stored as the Push content in accordance with the stored Push condition. Specifically, the notification server 32 transmits a Message transfer request including the msg body and the UE MSISDN converted at the above-mentioned Step S35 to the SMSC/MMSC 63 (Step S37).

The SMSC/MMSC 63 transmits the msg body to the mobile phone 70 (Step S38). Assume that the mobile phone 70 camps on the femto cell 40 (or another femto cell). In this case, the msg body passes through the MSC 61, the RAN-GW 20 and the femto base station 10 (or another femto base station) in this order, and thus reaches the mobile phone 70. On the other hand, assume that the mobile phone 70 camps on the macro cell 90. In this case, the msg body passes through the MSC 61, the RNC 100 and the macro base station 80 in this order, and thus reaches the mobile phone 70.

Thus, it is possible to deliver, in real time, information specific to the location where the femto base station 10 is placed. For example, assume that the femto base station 10 is placed in a shop. In this case, it is possible to deliver information such as flyers and coupons on recommended goods to a user of the mobile phone 70 who passes by the shop. Further, when the user leaves the shop, it is possible to deliver a coupon for prompting the user to come to the shop again.

There is also an advantage for the third party to easily designate an area to which the information is delivered, by using the Area ID. Further, in a case where the Area ID is allocated as the group identifier, the third party can deliver the service in common to a plurality of areas.

### (3-2) Operation example in a case of using as a trigger a specific mobile phone's entering or leaving a specific femto cell

As shown in Fig. 7, the presence server 31 transmits to the notification server 32 a Notify Presence intended for a combination of the HNB ID and UE IMSI required at Step S6 in Fig. 3 (Step S41). Taking as an example a case where the Notify Presence is intended for a combination of the HNB ID of the femto base station 10 and the UE IMSI of the mobile phone 70, the Notify Presence includes User Name, Presence and Status set as follows.

- User Name: UE IMSI of the mobile phone 70
- Presence: HNB ID of the femto base station 10
- Status: Arrival or Left

Then, the notification server 32 converts the notified UE IMSI into the UE MSISDN and the User ID. Specifically, the notification server 32 transmits a Search user request including the UE IMSI to the profile server 33 (Step S42). The profile server 33 retrieves the mapping information described in the above-mentioned item (C) by using the UE IMSI as a key, thereby acquiring the UE MSISDN corresponding to the UE IMSI. Further, the profile server 33 retrieves the mapping information described in the above-mentioned item (B) by using the UE IMSI as a key, thereby acquiring the User ID corresponding to the UE IMSI. Then, the profile server 33 transmits a Search user response including the acquired UE MSISDN and User ID to the notification server 32 (Step S43).

Further, the notification server 32 converts the notified HNB ID into the Area ID. Specifically, the notification server 32 transmits a Search location request including the HNB ID to the profile server 33 (Step S44). The profile server 33 retrieves the mapping information described in the above-mentioned item (A) by using the HNB ID as a key, thereby acquiring the Area ID corresponding to the HNB ID. Then, the profile server 33 transmits a Search location response including the acquired Area ID to the notification server 32 (Step S45).

Then, the notification server 32 generates a Push service by using the User ID and Area ID converted at the above-mentioned Steps S43 and S45, and the above-mentioned parameters (D) to (F) stored at Step S7 in Fig. 3 (Step S46).

Specifically, the notification server 32 firstly determines whether or not the acquired Area ID coincides with the stored Area ID. If the both Area IDs do not coincide with each other, the notification server 32 does not deliver information.

On the other hand, if the both Area IDs coincide with each other, the notification server 32 further determines whether or not the acquired User ID coincides with the stored User ID. If the both User IDs do not coincide with each other, the notification server 32 does not deliver information.

If the both User IDs coincide with each other, the notification server 32 delivers to the mobile phone 70 the msg body stored as the Push content in accordance with the stored Push condition. Specifically, the notification server 32 transmits a Message transfer request including the msg body and the UE MSISDN converted at the above-mentioned Step S43 to the SMSC/MMSC 63 (Step S47).

The SMSC/MMSC 63 transmits the msg body to the mobile phone 70 (Step S48). Assume that the mobile phone 70 camps on the femto cell 40 (or another femto cell). In this case, the msg body passes through the MSC 61, the RAN-GW 20 and the femto base station 10 (or another femto base station) in this order, and thus reaches the mobile phone 70. On the other hand, assume that the mobile phone 70 camps on the macro cell 90. In this case, the msg body passes through the MSC 61, the RNC 100 and the macro base station 80 in this order, and thus reaches the mobile phone 70.

Thus, it is possible to deliver, in real time, information which is specific to the location where the femto base station 10 is placed, and which is intended for a specific user. For example, assume that the femto base station 10 is placed in a shop dealing in goods for young people. In this case, it is possible to deliver information such as flyers and coupons on the goods only when the user of the mobile phone 70 who passes by the shop is a young person. In other words, the third party or the shop can efficiently deliver the information.

There is also an advantage for the third party to easily designate a user to which the information is delivered, by using the User ID. Further, in a case where the User ID is allocated as the group identifier, the 3rd Party can deliver the service in common to a plurality of users.

Further, the notification server 32 can deliver the msg body to a mobile phone or a terminal such as a PC other than the mobile phone 70 (the object to be monitored with respect to presence information). For example, assume that the femto base station 10 is placed in a specific area such as a home, a school or a shop, and that the user of the mobile phone 70 is a person such as a child or an elderly person to be watched. In this case, it is possible to deliver, in real time to third persons, information indicating that the person to be watched arrives at or leaves the specific area.

### [Second exemplary embodiment]

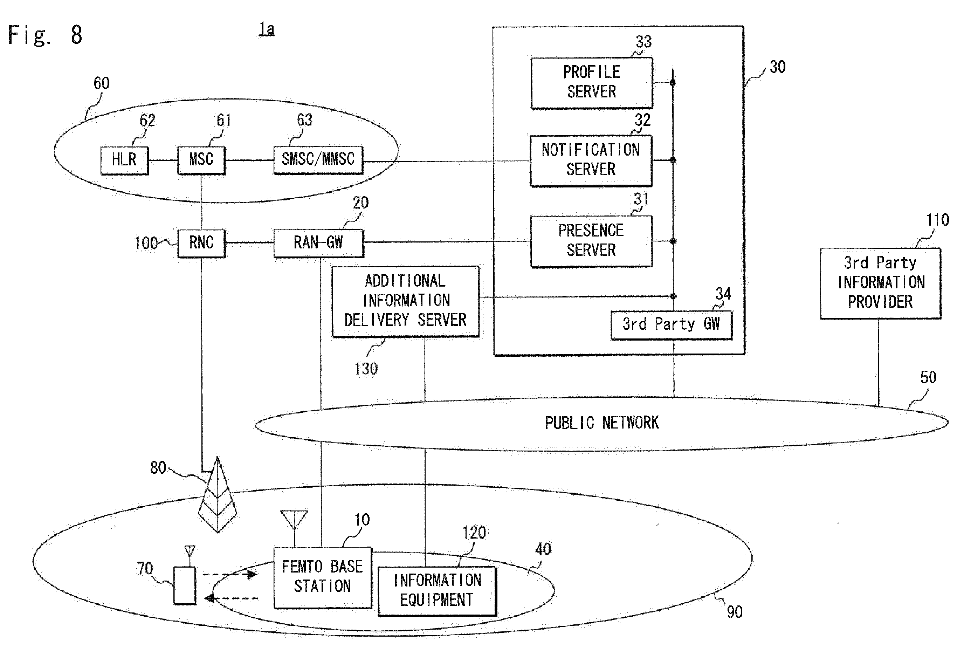

As shown in Fig. 8, a service delivery system 1a according to this exemplary embodiment is different from the above-mentioned first exemplary embodiment, in that an information equipment 120 and an additional information delivery server 130 are provided in addition to the structure of the service delivery system 1 shown in Fig. 2.

Among them, the information equipment 120 is the equipment such as a Digital Signage, PDA (Personal Digital Assistants) or a PC which is placed within the femto cell 40.

On the other hand, the additional information delivery server 130 is controlled by the SDP 30. Further, the additional information delivery server 130 instructs the information equipment 120 to deliver additional information relating to the information delivered by the SDP 30.

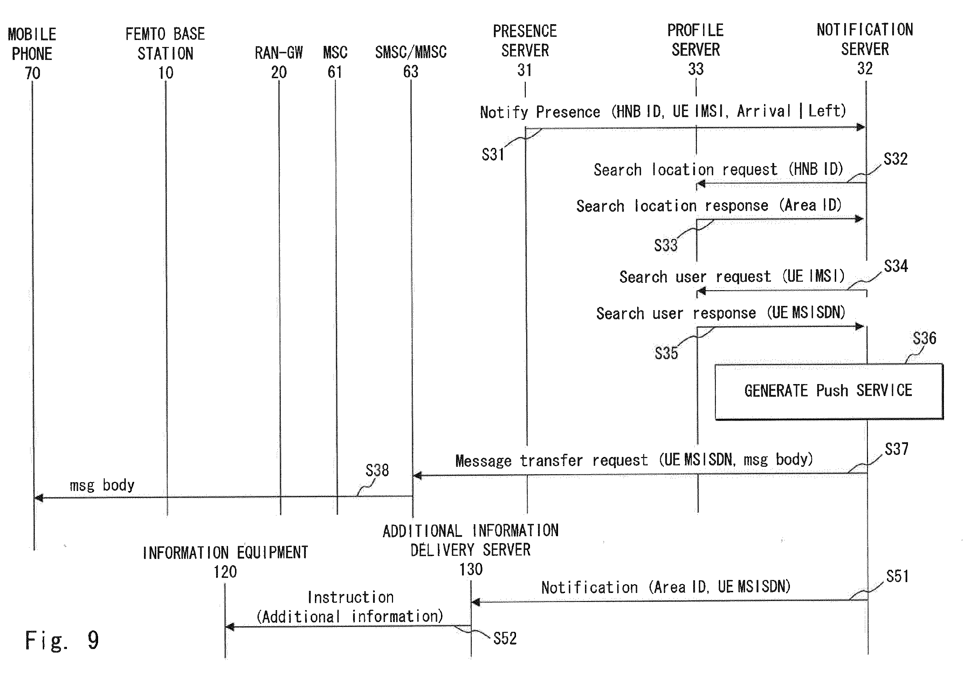

In the operation, processes at Steps S51 and S52 shown in Fig. 9 are executed in addition to the processes at the above-mentioned Steps S31 to S38 shown in Fig. 6.

That is, in parallel with the above-mentioned Step S37, the notification server 32 transmits e.g., a notification (hereinafter, Notification) including the Area ID converted at the above-mentioned Step 33 and the UE MSISDN converted at the above-mentioned Step S35 to the additional information delivery server 130 (Step S51).

Then, the additional information delivery server 130 specifies the information equipment 120 based on the notified Area ID, and transmits an instruction (hereinafter, Instruction) to deliver the additional information to the information equipment 120 through the public network 50 (Step S52). At this time, the additional information delivery server 130 preferably generates additional information specific to the UE MSISDN (in other words, additional information in accordance with a user attribute of the mobile phone 70).

Thus, in addition to the above-mentioned msg body, the additional information including video data, audio data, combined multimedia data thereof or the like is delivered to the user of the mobile phone 70 in real time. For example, assume that the information equipment 120 is a Digital Signage placed within an airport. In this case, it is possible to display, in a user's language, information (regional information, hotel information and the like) in categories suited for preferences of a user passing by the Digital Signage. Note that the notification server 32 may notify the additional information delivery server 130 of information on the user attribute as a substitute for the UE MSISDN. Further, the additional information may be included in the Push content described in the above-mentioned item (F). Furthermore, the notification server 32 may cause the information equipment 120 to deliver the msg body, instead of delivering the msg body (in other words, without executing the above-mentioned Step S37).

Note that the present invention is not limited to the above-described exemplary embodiments, and it will be understood by those of ordinary skill in the art that various changes in form and details may be made therein without departing from the spirit and scope of the present invention as defined by the claims.

For example, each process of the SDP 30 described in the above-described exemplary embodiments can be provided as a program to be executed by a computer. In this case, the program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line such as electric wires and optical fibers or a wireless communication line.

Further, the notification server 32 can also deliver privilege information or the like when the user of the mobile phone 70 follows a movement route designated by the 3rd Party information provider 110. Specifically, the notification server 32 traces a reception history of the Set Presences intended for the mobile phone 70, thereby estimating a movement history of the mobile phone 70 moving between femto base stations. When this movement history coincides with a movement history preliminarily designated by the 3rd Party information provider 110, the notification server 32 delivers the information.

This application is based upon and claims the benefit of priority from Japanese patent application No. 2010-018640, filed on January 29, 2010, the disclosure of which is incorporated herein in its entirety by reference.

### Industrial Applicability

The present invention is applied to a service delivery platform, a service delivery system, and a service delivery method and program, and is particularly applied to the purpose of delivering a Push-type service utilizing location information of a femto cell. Specifically, the present invention can also be applied to services as listed below in addition to the above-described advertisement delivery service such as flyers and coupons, watching service for children, elderly people or the like, and additional information delivery service.

- End-user matching service: for example, a service for delivering information on other users existing at the same place (under the same femto cell)
- Application software delivery service: for example, a service for delivering application software such as a game played in only a specific place (under a specific femto cell)

The whole or part of the exemplary embodiments disclosed above can be described as, but not limited to, the following supplementary notes.

### (Supplementary note 1)

A service delivery platform comprising:
a first server that receives, from a gateway connected to a base station through a public network and relaying traffic between the base station and a core network, a message indicating that a mobile station enters or leaves a radio communication area formed by the base station; and
a second server that uses reception of the message as a trigger to deliver information to the mobile station or a destination set in association with the mobile station.

### (Supplementary note 2)

The service delivery platform according to Supplementary note 1,
wherein when the gateway relays traffic between a plurality of base stations and the core network, the first server receives from the gateway a message indicating that the mobile station enters or leaves a radio communication area formed by each of the base stations, and
wherein the second server delivers the information when the message indicates that the mobile station enters or leaves a radio communication area formed by a specific base station designated by a provider of the information.

### (Supplementary note 3)

The service delivery platform according to Supplementary note 2, further comprising:
a third server that stores mapping information indicating a correspondence relationship between first identifiers for the core network to uniquely identify each of the base stations and second identifiers for the provider to designate each of the base stations,
wherein the second server is configured to:
   refer to the mapping information to convert a first identifier included in the message into a corresponding second identifier; and
   deliver the information when the second identifier obtained by the conversion coincides with a second identifier used by the provider upon designating the specific base station.

### (Supplementary note 4)

The service delivery platform according to Supplementary note 3, wherein the second identifier is allocated in common to two or more base stations.

### (Supplementary note 5)

The service delivery platform according to Supplementary note 1 or 2, wherein the second server delivers the information when the message indicates that a specific mobile station designated by a provider of the information enters or leaves the radio communication area.

### (Supplementary note 6)

The service delivery platform according to Supplementary note 5, further comprising:
a third server that stores mapping information indicating a correspondence relationship between first identifiers for the core network to uniquely identify each of a plurality of mobile stations and second identifiers for the provider to designate each of the mobile stations,
wherein the second server is configured to:
   refer to the mapping information to convert a first identifier included in the message into a corresponding second identifier; and
   deliver the information when the second identifier obtained by the conversion coincides with a second identifier used by the provider upon designating the specific mobile station.

### (Supplementary note 7)

The service delivery platform according to Supplementary note 6, wherein the second identifier is allocated in common to two or more mobile stations.

### (Supplementary note 8)

The service delivery platform according to Supplementary note 1, wherein the second server causes an information equipment placed within the radio communication area to deliver information, as a substitute for delivering the information to the mobile station or the destination.

### (Supplementary note 9)

The service delivery platform according to Supplementary note 1,
wherein when the gateway relays traffic between a plurality of base stations and the core network, the first server receives from the gateway messages indicating that the mobile station enters or leaves radio communication areas formed by the respective base stations, and
wherein the second server estimates a movement history of the mobile station moving between the base stations based on a reception history of the messages, and delivers the information when the estimated movement history coincides with a movement history designated by a provider of the information.

### (Supplementary note 10)

A service delivery method comprising:
receiving, from a gateway connected to a base station through a public network and relaying traffic between the base station and a core network, a message indicating that a mobile station enters or leaves a radio communication area formed by the base station; and
using reception of the message as a trigger to deliver information to the mobile station or a destination set in association with the mobile station.

### (Supplementary note 11)

The service delivery method according to Supplementary note 10,
wherein when the gateway relays traffic between a plurality of base stations and the core network, a message indicating that the mobile station enters or leaves a radio communication area formed by each of the base stations is received from the gateway, and
wherein the information is delivered when the message indicates that the mobile station enters or leaves a radio communication area formed by a specific base station designated by a provider of the information.

### (Supplementary note 12)

The service delivery method according to Supplementary note 11, further comprising:
storing mapping information indicating a correspondence relationship between first identifiers for the core network to uniquely identify each of the base stations and second identifiers for the provider to designate each of the base stations,
wherein the mapping information is referred to, to convert a first identifier included in the message into a corresponding second identifier, and
wherein the information is delivered when the second identifier obtained by the conversion coincides with a second identifier used by the provider upon designating the specific base station.

### (Supplementary note 13)

The service delivery method according to Supplementary note 12, including:
using, as the second identifier, an identifier allocated in common to two or more base stations.

### (Supplementary note 14)

The service delivery method according to Supplementary note 10 or 11, wherein the information is delivered when the message indicates that a specific mobile station designated by a provider of the information enters or leaves the radio communication area.

### (Supplementary note 15)

The service delivery method according to Supplementary note 14, further comprising:
storing mapping information indicating a correspondence relationship between first identifiers for the core network to uniquely identify each of a plurality of mobile stations and second identifiers for the provider to designate each of the mobile stations,
wherein the mapping information is referred to, to convert a first identifier included in the message into a corresponding second identifier, and
wherein the information is delivered when the second identifier obtained by the conversion coincides with a second identifier used by the provider upon designating the specific mobile station.

### (Supplementary note 16)

The service delivery method according to Supplementary note 15, including:
using, as the second identifier, an identifier allocated in common to two or more mobile stations.

### (Supplementary note 17)

The service delivery method according to Supplementary note 10, including:
causing an information equipment placed within the radio communication area to deliver additional information relating to the information.

### (Supplementary note 18)

The service delivery method according to Supplementary note 10, including:
causing an information equipment placed within the radio communication area to deliver information, as a substitute for delivering the information to the mobile station or the destination.

### (Supplementary note 19)

The service delivery method according to Supplementary note 17 or 18, including:
causing the information equipment to deliver information in accordance with an attribute of a user possessing the mobile station.

### (Supplementary note 20)

The service delivery method according to Supplementary note 10,
wherein when the gateway relays traffic between a plurality of base stations and the core network, messages indicating that the mobile station enters or leaves radio communication areas formed by the respective base stations are received from the gateway, and
wherein a movement history of the mobile station moving between the base stations is estimated based on a reception history of the messages, and the information is delivered when the estimated movement history coincides with a movement history designated by a provider of the information.

### Reference Signs List

- 1, 1a: SERVICE DELIVERY SYSTEM
- 10: FEMTO BASE STATION
- 20: RAN-GW
- 30: SDP
- 31: PRESENCE SERVER
- 32: NOTIFICATION SERVER
- 33: PROFILE SERVER
- 34: 3RD PARTY GW
- 40: FEMTO CELL
- 50: PUBLIC NETWORK
- 60: CORE NETWORK
- 61: MSC
- 62: HLR
- 63: SMSC/MMSC
- 70: MOBILE PHONE
- 80: MACRO BASE STATION
- 90: MACRO CELL
- 100: RNC
- 110: 3RD PARTY INFORMATION PROVIDER
- 120: INFORMATION EQUIPMENT
- 130: ADDITIONAL INFORMATION DELIVERY SERVER

## Claims

1. A service delivery platform comprising:
a first server that receives, from a gateway connected to a base station through a public network and relaying traffic between the base station and a core network, a message indicating that a mobile station enters or leaves a radio communication area formed by the base station; and
a second server that uses reception of the message as a trigger to deliver information to the mobile station or a destination set in association with the mobile station.

2. The service delivery platform according to Claim 1,
wherein when the gateway relays traffic between a plurality of base stations and the core network, the first server receives from the gateway a message indicating that the mobile station enters or leaves a radio communication area formed by each of the base stations, and
wherein the second server delivers the information when the message indicates that the mobile station enters or leaves a radio communication area formed by a specific base station designated by a provider of the information.

3. The service delivery platform according to Claim 2, further comprising:
a third server that stores mapping information indicating a correspondence relationship between first identifiers for the core network to uniquely identify each of the base stations and second identifiers for the provider to designate each of the base stations,
wherein the second server is configured to:
refer to the mapping information to convert a first identifier included in the message into a corresponding second identifier; and
deliver the information when the second identifier obtained by the conversion coincides with a second identifier used by the provider upon designating the specific base station.

4. The service delivery platform according to Claim 1 or 2, wherein the second server delivers the information when the message indicates that a specific mobile station designated by a provider of the information enters or leaves the radio communication area.

5. The service delivery platform according to Claim 4, further comprising:
a third server that stores mapping information indicating a correspondence relationship between first identifiers for the core network to uniquely identify each of a plurality of mobile stations and second identifiers for the provider to designate each of the mobile stations,
wherein the second server is configured to:
refer to the mapping information to convert a first identifier included in the message into a corresponding second identifier; and
deliver the information when the second identifier obtained by the conversion coincides with a second identifier used by the provider upon designating the specific mobile station.

6. The service delivery platform according to Claim 1, wherein the second server causes an information equipment placed within the radio communication area to deliver additional information relating to the information.

7. The service delivery platform according to Claim 6, wherein the second server causes the information equipment to deliver information in accordance with an attribute of a user possessing the mobile station.

8. A service delivery system comprising:
a base station that forms a radio communication area;
a gateway that is connected to the base station through a public network and that relays traffic between the base station and a core network; and
a service delivery platform that delivers information to a mobile station capable of wirelessly connecting to the base station or a destination set in association with the mobile station,
wherein the service delivery platform uses reception from the gateway of a message indicating that the mobile station enters or leaves the radio communication area as a trigger to deliver the information.

9. A service delivery method comprising:
receiving, from a gateway connected to a base station through a public network and relaying traffic between the base station and a core network, a message indicating that a mobile station enters or leaves a radio communication area formed by the base station; and
using reception of the message as a trigger to deliver information to the mobile station or a destination set in association with the mobile station.

10. A non-transitory computer readable medium storing a service delivery program, the program causing a computer to execute:
a process to receive, from a gateway connected to a base station through a public network and relaying traffic between the base station and a core network, a message indicating that a mobile station enters or leaves a radio communication area formed by the base station; and
a process to use reception of the message as a trigger to deliver information to the mobile station or a destination set in association with the mobile station.
